# EUROPÄISCHE PATENTSCHRIFT

(11) **EP 0 568 000 B1**
(45) Veröffentlichungstag und Bekanntmachung des Hinweises auf die Patenterteilung: **29.01.1997**
(21) Anmeldenummer: 93106800.1
(22) Anmeldetag: 27.04.1993
(51) Int. Cl.: F16B 13/06

(54) **Dübel**
Dowel
Cheville

(30) Priorität: 28.04.1992 DE 4213941
(43) Veröffentlichungstag der Anmeldung: 03.11.1993
(73) Patentinhaber: Bergner, Arndt, Dr., D-81375 München (DE)
(72) Erfinder: Bergner, Arndt, Dr., D-81375 München (DE)

(56) Entgegenhaltungen:
- EP-A- 0 308 619
- EP-A- 0 365 475
- EP-A- 0 416 183
- DE-A- 3 146 027
- FR-A- 2 346 591

## Beschreibung

Die Erfindung betrifft einen Dübel mit einem Ankerbolzen, dessen zylindrischer Schaft eine in Setzrichtung verlaufende Erweiterung aufweist und dessen Schaft an dem dieser Erweiterung abgewandten Ende Angriffsmittel zur Lastaufnahme trägt, wobei der Ankerbolzen von einer leicht zu ihm verschiebbaren Hülse, deren Innendurchmesser dem Außendurchmesser des Schaftes entspricht, und von mehreren Spreizelementen umgeben ist.

Dübel, die durch Eintreiben der Spreizhülse sich selbst einen Hinterschnitt schaffen, sind aus der DE-A- 31 46 027 und aus der EP-A- 0 308 619 bekannt. Der Dübel nach der DE-A- 31 46 027 erzeugt hohe radial wirkende Sprengkräfte und erzielt nur kleine radiale Aufweitungen des Bohrloches. Dieser Dübel ist deshalb für die Anordnung in der Zugzone des Betons wenig geeignet. Beim Dübel nach EP-A- 0 308 619 weist die Spreizhülse eine Querschnittsverjüngung auf, damit sich die Spreizhülse an der Querschnittsverjüngung verformen und das setzrichtungsseitig vor der Querschnittsverjüngung liegende mehrere Zähne aufweisende Spreizhülsenteil auf die Erweiterung des Ankerbolzens schieben kann. Beim Aufschieben auf die Erweiterung des Ankerbolzens wird der Untergrund, z. B. Beton, ausgemeißelt und eine Aufweitung der Bohrung hergestellt. Beim Verformen der Spreizhülse, das infolge der Funktionsweise des Dübels unerläßlich ist, wird Energie verbraucht, die für das Ausmeißeln des Hinterschnittes zur Ausweitung der Bohrung verlorengeht. Ein weiterer Energieverlust in bezug auf den Meißelvorgang tritt durch die Querschnittsverjüngung der Spreizhülse ein, da die z. B. durch einen Bohrhammer auf die Stirnseite der Spreizhülse aufgebrachten Kraftstöße durch die Querschnittsverjüngung stark reduziert werden.

Durch die Summe der Energieverluste sind die Zeiten für das Eintreiben der Hülse hoch und die Aufweitung der Bohrung im Untergrund klein. insbesondere im harten Untergrund und beim Auftreffen der Schneidzähne auf harte Kieselsteine.

Der Erfindung liegt daher die Aufgabe zugrunde. einen Dübel zu schaffen, der mit geringem Energieaufwand und in kurzer Zeit setzbar ist und der größere Aufweitungen der Bohrung im Untergrund erreicht und dadurch für einen Unter grund mit Rissen (Zugzone des Betons) gut geeignet ist.

Diese Aufgabe wird erfindungsgemäß dadurch gelöst, daß die hülsenseitige Stirnseite der Spreizelemente eine Erhebung aufweist.

Die gerade verlaufende Erhebung an der hülsenseitigen Stirnseite der Spreizelemente gewährleistet ein Aufschieben der Spreizelemente auf die Erweiterung des Ankerbolzens durch Ausschwenken der Spreizelemente, d. h. die Verformung der Spreizhülse wird vermieden. Durch eine Vertiefung an der Stirnseite der Hülse, in die die Erhebungen der Spreizelemente eingreifen, wird auch eine verlustarme Übertragung der Kraftstöße auf die Spreizelemente erreicht. Der halbkreisförmige Querschnitt der Erhebung und der Vertiefung führt zu größerer Schmiegung, die für eine verlustarme Übertragung der Kraftstöße auf die Schneiden der Spreizelemente günstig ist. Die Übertragung des Kraftstoßes wird effektiv, wodurch sowohl ein schneller Abbau des Untergrundes beim Meißeln als auch eine große Aufweitung des Bohrloches erreicht werden.

Bei Anordnung der Vertiefung am Segment und der Erhebungen an der Hülse ergeben sich ebenfalls gute Schmiegungsverhältnisse, wodurch ebenfalls die Effektivität der Übertragung der Kraftstöße, der schnelle Abbau des Untergrundes und die große Aufweitung des Bohrloches erreicht werden. Die konkave Wölbung an der Erweiterung der Ankerstange und die Anordnung mehrerer Schneiden am Spreizelement führt zu einer Verbesserung des Meißelvorganges beim Eintreiben der Spreizhülse, z.B. mit einem in einen Bohrhammer eingespannten rohrförmigen Werkzeug.

In den Zeichnungen sind drei Ausführungsbeispiele der Erfindung dargestellt. Es zeigen
- Fig. 1: das erste Ausführungsbeispiel des Dübels im Längsschnitt im ungespreizten Zustand.
- Fig. 2: einen vergrößerten Auschnitt aus Fig. 1.
- Fig. 3: ein Spreizelement gemäß Dübel der Fig. 1 in Stirnansicht in vergrößerter Darstellung
- Fig. 4: ein Spreizelement gemäß Dübel der Fig. 1 in Seitenansicht in vergrößerter Darstellung.
- Fig. 5: ein Spreizelement gemäß Dübel der Fig. 1 in Draufsicht in vergrößerter Darstellung
- Fig. 6: den Querschnitt I-I (siehe Fig. 1)
- Fig. 7: eine Hülse gemäß Dübel der Fig. 1 in Seitenansicht in vergrößerter Darstellung.
- Fig. 8: eine Hülse gemäß Dübel der Fig. 1 in Stirnansicht in vergrößerter Darstellung.
- Fig. 9: den Dübel gemäß Fig. 1 während des Setzvorganges.
- Fig. 10: den Dübel gemäß Fig. 1 in gesetztem Zustand.
- Fig. 11: das zweite Ausführungsbeispiel des Dübels im Längsschnitt im ungespreizten Zustand.
- Fig. 12: die Seitenansicht des Spreizelementes des Dübels gemäß Fig. 11 in vergrößerter Darstellung.
- Fig. 13: das dritte Ausführungsbeispiel des Dübels im Längsschnitt im ungespreizten Zustand.
- Fig. 14: die Seitenansicht des Spreizelementes des Dübels gemäß Fig. 13 in vergrößerter Darstellung.

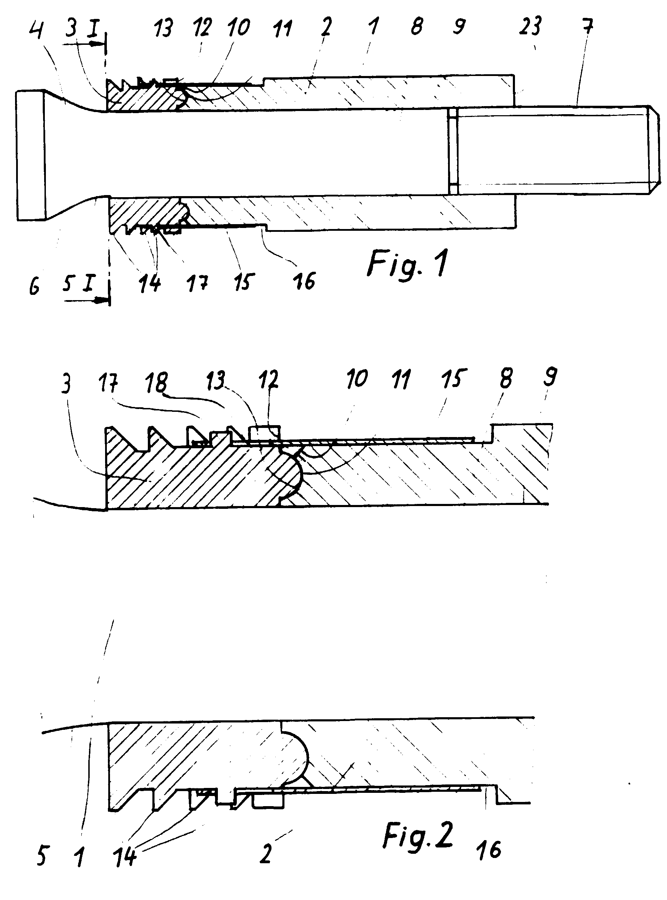

Wie den Fig. 1 und 2 zu entnehmen ist, weist der Ankerbolzen 1 am in Setzrichtung vorderen Ende eine Erweiterung 4 auf, die aus einem konkaven Abschnitt 5 und einen konischen Abschnitt 6 besteht. Der rückwärtige Teil des Ankerbolzens 1 weist ein Gewinde 7 zur Lastaufnahme auf. Der mittlere Teil des Ankerbolzens 1 ist als zylindrischer Schaft 8 ausgebildet.

Die Hülse 2 weist eine Bohrung 9 auf, deren Innendurchmesser etwa dem Außendurchmesser des zylindrischen Schaftes 8 entspricht. An ihrer spreizelementseitigen Stirnseite 10 weist die Hülse 2 Vertiefungen von kreisrunder Querschnittsform 11 auf, für jedes Spreizelement 3 eine Vertiefung 11. Die Querschnittsform der Vertiefung 11 ist nur ein Beispiel. Es gibt auch andere Querschnittsformen der Vertiefung 11, z.B. Querschnittsformen der Vertiefung 11 mit konkaver Wölbung, mit elliptischem Querschnitt, mit rechteckigem Querschnitt und abgerundeten Ecken oder eine Ausführung ohne Vertiefung.

Die Spreizelemente 3 weisen an ihrer hülsenseitigen Stirnseite 12 eine gerade verlaufende Erhebung 13 mit halbkreisförmigen Querschnitt auf. Der halbkreisförmige Querschnitt der Erhebung steht beispielhaft für andere Querschnittsformen, z. B. Erhebungen mit elliptischem Querschnitt, mit rechteckigem Querschnitt mit abgerundeten Ecken, mit beliebig konvex gewölbtem Querschnitt. An ihren Außenflächen weisen die Spreizelement 3 mehrere Schneiden 14 auf.

Die Spreizelemente 3 werden durch Haltelaschen 15, die an den Flächen 16 der Hülse 2 durch Punktschweißen befestigt sind, am Ankerbolzen 1 gehalten, indem der Haltezapfen 17 der Spreizelemente 3 in den Ausschnitt 18 der Haltelaschen 15 eingerastet ist. Die Haltelaschen 15 verbinden die Spreizelemente 3 mit der Hülse 2 und sind zusammen mit der Hülse 2 auf dem Ankerbolzen 1 verschiebbar. Dabei greifen die halbkreisförmigen Erhebungen 13 der Spreizelemente 3 in die kreisförmigen Vertiefungen 11 der Hülse 2 ein und stellen ein gutes Schmiegungsverhältnis sicher.

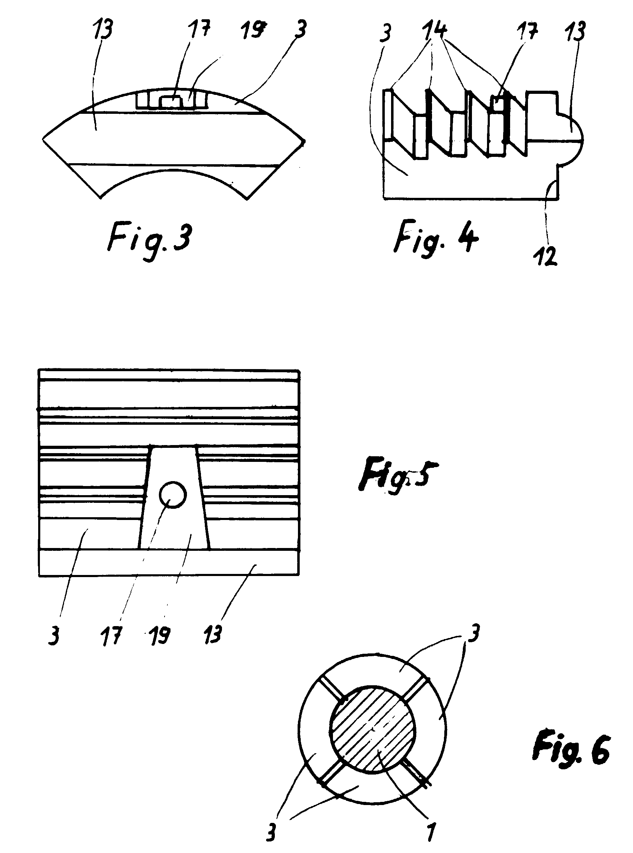

Die Fig. 3, 4 und 5 zeigen ein Spreizelement 3 als Einzelteil in drei Ansichten in einer gegenüber der Fig. 1 vergrößerten Darstellung.

In Fig. 3 sind in der Vorderansicht des Spreizelementes 3 der gerade Verlauf der Erhebung 13 mit halbkreisförmigen Querschnitt, der Haltezapfen 17 und die Aussparung 19, in der der vordere Teil der Haltelasche 15 liegt, dargestellt.

In Fig. 4 sind in der Seitenansicht des Spreizelementes 3 die hülsenseitige Stirnseite 12, die halbkreisförmige Erhebung 13, der Haltezapfen 17 und die Schneiden 14 abgebildet.

In Fig. 5 sind in der Draufsicht eines Spreizelementes 3 die Erhebung 13, der Haltezapfen 17, die Aussparung 19 für die Haltelaschen 15 und die Schneiden 14 dargestellt.

Fig. 6 zeigt den Schnitt I-I aus Fig. 1 mit der Ankerstange 1 und vier Spreizelementen 3. Die Ausführung mit vier Spreizelementen 3 ist nur beispielhaft; die Anzahl der Spreizelemente ist beliebig, z. B. drei oder fünf.

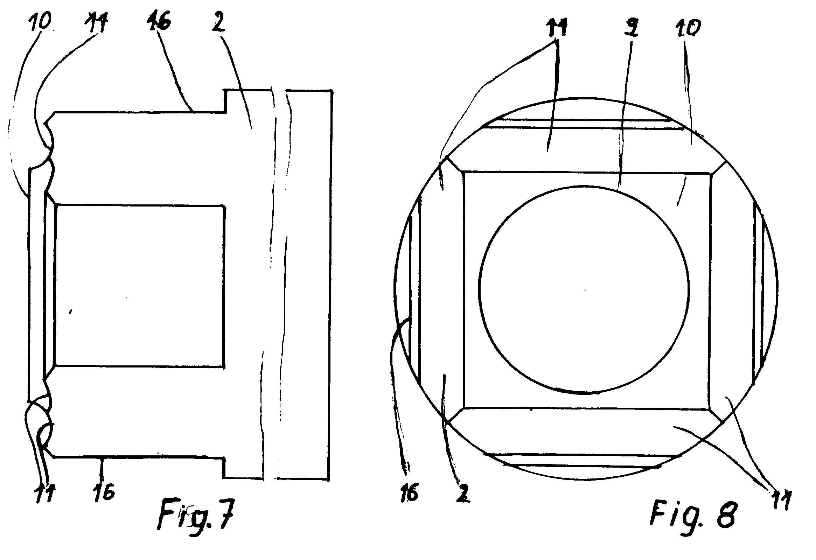

Die Fig. 7 und 8 zeigen im vergrößertem Maßstab gegenüber Fig. 1 die Hülse 2 als Einzelteil in zwei Ansichten.

Die Fig. 7 verdeutlicht in der Stirnansicht die vier gerade verlaufenden Vertiefungen 11 der Hülse 2 mit ihrer Bohrung 9 und die vier Flächen 16 für die Befestigung der Haltelaschen 15.

Die Fig. 8 verdeutlicht in der Seitenansicht der Hülse 2 die spreizelementseitige Stirnseite 10, die vier Vertiefungen 11 mit kreisrunden Querschnitt sowie die Fläche 16.

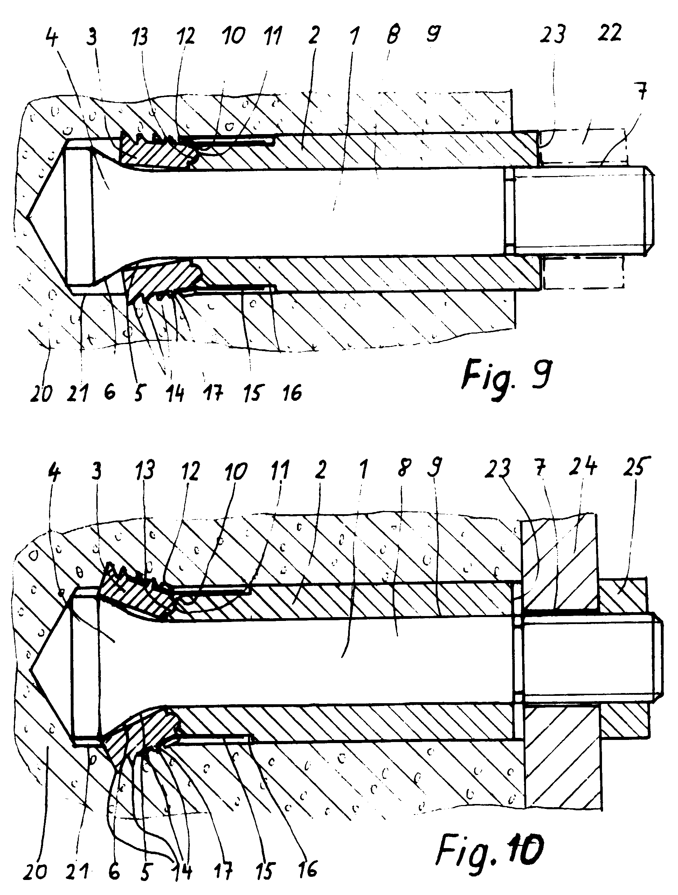

Die Fig. 9 zeigt den Setzvorgang des Dübels. Im Untergrund 20 (z. B. Beton) ist ein Bohrloch 21 mit einem dem Dübel entsprechenden Durchmesser hergestellt und der Dübel ist in das Bohrloch 21 eingeschoben worden. Mit einem Setzwerkzeug 22, das durch gestrichelt Linien nur teilweise dargestellt ist, wird die den Spreizelementen 3 abgewandte Stirnseite 23 der Hülse 2 mit Kraftstößen beaufschlagt. Zu diesem Zweck kann das Setzwerkzeug 22 zum Beispiel in einen hier nicht dargestellten Bohrhammer eingespannt sein. Durch die Kraftstöße werden die Spreizelemente 3 auf die Erweiterung 4 des Ankerbolzens 1 und gegen die Wandung des Bohrloches 21 getrieben, so daß die Schneiden 14 Material des Untergrundes 20 durch Meißeln abtragen und das Bohrloch 21 aufweiten. Wie die Fig. 9 deutlich zeigt, ist für das Abtragen von Material des Untergrundes 20 ein Ausschwenken der Spreizelemente 3 gegenüber der Hülse 2 notwendig. Dies wird unter Vermeidung von Verformungen sichergestellt durch die Erhebung 13 der Spreizelemente 3 und durch die Vertiefung 11 der Hülse 2. Durch die gute Schmiegung zwischen der Erhebung 13 und der Vertiefung 11 wird eine verlustarme Weiterleitung der Kraftstöße an die Schneiden 14 der Spreizelemente 3 erzielt.

In Fig. 10 sind die Spreizelemente 3 bis in die vorgesehene Position eingetrieben und haben eine Aufweitung der Bohrung erzeugt. Ein zu befestigendes Bauteil 24 ist auf das Gewinde 7 des Ankerbolzens 1 aufgesteckt und mittels einer auf das Gewinde 7 aufgeschraubten Mutter 25 befestigt.

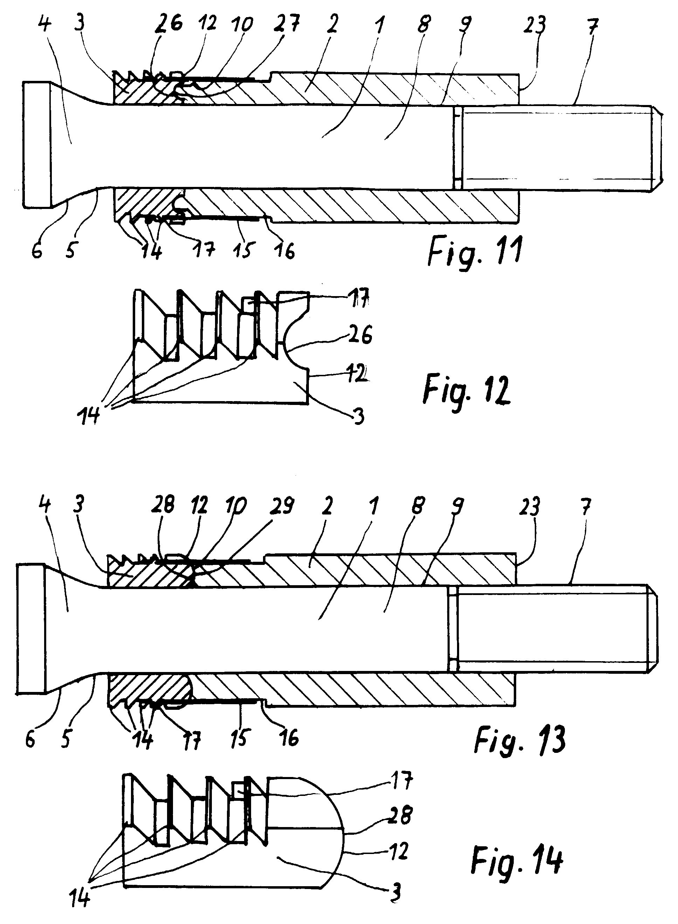

Die Fig. 11 und 12 gehören zu dem zweiten Ausführungsbeispiel. Der Dübel ist dem Dübel gemäß der Fig. 1 bis 10 sehr ähnlich. Es stimmen alle Merkmale mit dem Dübel gemäß der Fig. 1 bis 10 überein außer den Erhebungen 13 der Spreizelemente 3 und außer den Vertiefungen 11 der Hülse 2. Deswegen bedürfen die übereinstimmenden Merkmale (alle Merkmale außer den Merkmalen mit den Bezugszeichen 11 und 13) nicht einer nochmaligen Erläuterung.

Die Fig. 11 zeigt ein Ausführungsbeispiel mit einer halbkreisförmigen Vertiefung 26 am Spreizelement 3 und einer Erhebung 27 an der Hülse 2. Die halbkreisförmigen Erhebungen 27 an der Hülse 2 stehen beispielhaft für andere Querschnittsformen, z. B. für Erhebungen mit halbelliptischen Querschnitt, mit rechteckigem Querschnitt mit abgerundeten Ecken, mit beliebigen konvexen Querschnitt. Die Vertiefung 26 an dem Spreizelement 3 und die Erhebungen 27 an der Hülse 2 gewährleisten ein verformungsfreies Ausschwenken der Spreizelemente 3 und eine effektive Übertragung der Kraftstöße auf die Spreizelemente 3.

In Fig. 12 mit vergrößertem Maßstab wird das Spreizelement 3 als Einzelteil dargestellt und seine Vertiefung 26 verdeutlicht. Die halbkreisförmige Querschnittsform der Vertiefung 26 ist nur ein Beispiel. Es gibt auch andere Querschnittsformen der Vertiefung 26, z.B. Querschnittsformen mit konkaver Wölbung, mit halbelliptischer Form, mit rechteckiger Form mit abgerundeten Ecken oder ein Spreizelement 3 mit ebener Stirnseite

Der in den Fig. 13 und 14 gezeigte Dübel stimmt ebenfalls weitgehend mit dem Ausführungspeispiel der Fig. 1 bis 10 überein. Deswegen werden die übereinstimmenden Merkmale (alle Bezugszeichen außer 11 und 13) nicht noch einmal erläutert. Der Unterschied besteht gemäß Fig. 13 in einer Erhebung 28 mit einem großen gerundeten Querschnitt des Spreizelementes 3 und Vertiefungen 29 mit einem großen gerundeten Querschnitt an der Hülse 2.

In Fig. 14 wird das Spreizelement 3 als Einzelteil im vergrößertem Maßstab in der Seitenansicht dargestellt und die Erhebung 28 mit großem runden Querschnitt verdeutlicht.

## Patentansprüche

1. Dübel, bestehend aus einem Ankerbolzen(1) mit einem zylindrischen Schaft (8), der eine in Setzrichtung verlaufende Erweiterung (4) aufweist und dessen Schaft an dem dieser Erweiterung abgewandten Ende Angriffsmittel zur Lastaufnahme (7) trägt, wobei der Ankerbolzen (1) an der der Erweiterung (4) abgewandten Seite von einer leicht zu ihm verschiebbaren Hülse (2), deren Innendurchmesser dem Außendurchmesser des Schaftes (8) entspricht, umgeben ist und wobei um den Ankerbolzen (1) an der der Erweiterung (4) zugewandten Seite mehrere Spreizelemente (3), die eigenständige Bauteile bilden, wie Segmente angeordnet sind, **dadurch gekennzeichnet**, daß die hülsenseitige Stirnseite (12) der Spreizelemente (3) eine Erhebung (13) aufweist.

2. Dübel, bestehend aus einem Ankerbolzen (1) mit einem zylindrischen Schaft (8), der eine in Setzrichtung verlaufende Erweiterung (4) aufweist und dessen Schaft an dem dieser Erweiterung abgewandten Ende Angriffsmittel zur Lastaufnahme (7) trägt, wobei der Ankerbolzen (1) an der der Erweiterung (4) abgewandten Seite von einer leicht zu ihm verschiebbaren Hülse (2), deren Innendurchmesser dem Außendurchmesser des Schaftes (8) entspricht, umgeben ist und wobei um den Ankerbolzen (1) an der der Erweiterung (4) zugewandten Seite mehrere Spreizelemente (3), die eigenständige Bauteile bilden, wie Segmente angeordnet sind, **dadurch gekennzeichnet**, daß die spreizelementseitige Stirnseite (10) der Hülse (2) Erhebungen (27) entsprechend der Anzahl der Spreizelemente (3) aufweist.

3. Dübel nach Anspruch 1 oder 2, dadurch gekennzeichnet, daß die Erhebung (13) an der hülsenseitigen Stirnseite (12) der Spreizelemente (3) oder die Erhebungen (27) an der spreizelementseitigen Stirnseite (10) der Hülse (2) nicht wie die in axialer Dübelrichtung betrachteten Spreizelemente (3) gekrümmt ist sind.

4. Dübel nach Anspruch 1 oder 2, dadurch gekennzeichnet, daß die Erhebung (13) an der hülsenseitigen Stirnseite (12) der Spreizelemente, oder die Erhebungen (27) an der spreizelementseitigen Stirnseite (10) der Hülse (2), in axialer Dübelrichtung betrachtet, gerade ausgebildet ist sind.

5. Dübel nach einem der Ansprüche 1, 3 und 4, dadurch gekennzeichnet, daß die Erhebung (13) rechtwinklig zur Symmetrielinie des Spreizelementes (3) verläuft.

6. Dübel nach einem der Ansprüche 2 bis 4, dadurch gekennzeichnet, daß die Erhebung (27) parallel zu einer Tangente an den Kreisquerschnitt der Hülse (2) verläuft.

7. Dübel nach einem der Ansprüche 1 bis 6, dadurch gekennzeichnet, daß die Erhebung (13) an den Spreizelementen (3) oder die Erhebungen (27) an der Hülse (2) einen etwa halbkreisförmigen Querschnitt hat haben.

8. Dübel nach einem der Ansprüche 1, 3 bis 5 und 7, dadurch gekennzeichnet, daß die spreizelementseitige Stirnseite (10) der Hülse (2) Vertiefungen (11) entsprechend der Anzahl der Spreizelemente aufweist.

9. Dübel nach einem der Ansprüche 2 bis 4, 6 und 7 , dadurch gekennzeichnet, daß die hülsenseitige Stirnseite (12) der Spreizelemente (3) eine Vertiefung (26) aufweist.

10. Dübel nach einem der Ansprüche 1 bis 7 und nach Anspruch 8 oder 9 dadurch gekennzeichnet, daß die Spreizelemente (3) mehrere Schneiden (14) aufweisen und die Erweiterung (4) des Ankerbolzens (1) aus einem konischen Abschnitt (6) besteht, der über einen konkaven Abschnitt (5) in den zylindrischen Schaft (8) übergeht.

## Claims

1. A dowel consisting of a tie bolt (1) with a cylindrical shank (8), that has a widening (4) extending in the setting direction and the shank of which has engagement means for load reception (7) at the end facing away from this widening (4), the tie bolt (1) being surrounded at the side facing away from the widening (4) by a sleeve (2) which is easily displaceable towards the tie bolt (1) and whose inner diameter corresponds to the outer diameter of the shank (8), and several expansible elements (3) which form independent components being arranged like segments around the tie bolt (1) at the side facing the widening (4), characterised in that the sleeve-side front (12) of the expansible elements (3) comprises an elevation (13).

2. A dowel consisting of a tie bolt (1) with a cylindrical shank (8), that has a widening (4) extending in the setting direction and the shank of which has engagement means for load reception (7) at the end facing away from this widening (4), the tie bolt (1) being surrounded at the side facing away from the widening (4) by a sleeve (2) which is easily displaceable towards the tie bolt (1) and whose inner diameter corresponds to the outer diameter of the shank (8), and several expansible elements (3) which form independent components being arranged like segments around the tie bolt (1) at the side facing the widening (4), characterised in that the expansible-element-side front (10) of the sleeve (2) comprises elevations (27) corresponding to the number of the expansible elements (3).

3. A dowel according to claim 1 or 2, characterised in that the elevation (13) at the sleeve-side front (12) of the expansible elements (3) or the elevations (27) at the expansible-element-side front (10) of the sleeve (2) are not curved like the expansible elements (3) when viewed in the direction of the dowel axis.

4. A dowel according to claim 1 or 2, characterised in that the elevation (13) at the sleeve-side front (12) of the expansible elements or the elevations (27) at the expansible-element-side front (10) of the sleeve (2) are of a rectilinear design when viewed in the direction of the dowel axis.

5. A dowel according to any of claims 1, 3 and 4, characterised in that the elevation (13) is at right angles to the symmetrical line of the expansible element (3).

6. A dowel according to any of claims 2 to 4, characterised in that the elevation (27) runs parallel to a tangent at the circular cross-section of the sleeve (2).

7. A dowel according to any of claims 1 to 6, characterised in that the elevation (13) on the expansible elements (3) or the elevations (27) on the sleeve (2) have a cross-section that is approximately semi-circular in shape.

8. A dowel according to any of claims 1, 3 to 5 and 7, characterised in that the expansible-element-side front (10) of the sleeve (2) comprises recesses (11) that correspond to the number of the expansible elements.

9. A dowel according to any of claims 2 to 4, 6 and 7, characterised in that the sleeve-side front (12) of the expansible elements (3) comprises a recess (26).

10. A dowel according to any of claims 1 to 7 and according to claim 8 or 9, characterised in that the expansible elements (3) comprise several blades (14) and the widening (4) of the tie bolt (1) consists of a conical section (6) which passes over into the cylindrical shank (8) via a concave section (5).

## Revendications

1. Cheville constituée par un boulon d'ancrage (1) avec une tige cylindrique (8) qui présente un élargissement (4) s'étendant dans la direction de pose et dont la tige, à l'extrémité éloignée de cet élargissement (4), porte des moyens d'application en vue de la réception d'une charge (7), le boulon d'ancrage (1) étant entouré, du côté éloigné de l'élargissement (4), par une douille (2) facilement déplaçable par rapport à celui-ci, dont le diamètre intérieur correspond au diamètre extérieur de la tige (8), et étant disposés, de la façon de segments, autour du boulon d'ancrage (1), du côté à proximité de l'élargissement (4), plusieurs éléments d'expansion (3) qui constituent des pièces indépendantes, **caractérisées en ce que** le front (12), rapproché à la douille, des éléments d'expansion (3) présente une élévation (13).

2. Cheville constituée par un boulon d'ancrage (1) avec une tige cylindrique (8) qui présente un élargissement (4) s'étendant dans la direction de pose et dont la tige, à l'extrémité éloignée de cet élargissement (4), porte des moyens d'application en vue de la réception d'une charge (7), le boulon d'ancrage (1) étant entouré, du côté éloigné de l'élargissement (4), par une douille (2) facilement déplaçable par rapport à celui-ci, dont le diamètre intérieur correspond au diamètre extérieur de la tige (8), et étant disposés, de la façon de segments, autour du boulon d'ancrage (1), du côté à proximité de l'élargissement (4), plusieurs éléments d'expansion (3) qui constituent des pièces indépendantes, **caractérisée en ce que** le front (10), rapproché aux éléments d'expansion, de la douille (2) présente des élévations (27) dont le nombre correspond à celui des éléments d'expansion (3).

3. Cheville selon la revendication 1 ou 2, caractérisée en ce que l'élévation (13) sur le front (12), rapproché à la douille, des éléments d'expansion (3) ou les élévations (27) sur le front (10), rapproché aux éléments d'expansion, de la douille (2) n'est / ne sont pas courbée(s) comme les éléments d'expansion (3) vues en sens axial de la cheville.

4. Cheville selon la revendication 1 ou 2, caractérisée en ce que l'élévation (13) sur le front (12), rapproché à la douille, des éléments d'expansion ou les élévations (27) sur le front (10), rapproché aux éléments d'expansion, de la douille (2), vues en sens axial de la cheville, est / sont de forme droite.

5. Cheville selon l'une des revendications 1, 3 et 4, caractérisée en ce que l'élévation (13) s'étend en équerre par rapport à la bissectrice de l'élément d'expansion (3).

6. Cheville selon l'une des revendications 2 à 4, caractérisée en ce que l'élévation (27) se développe en sens parallèle par rapport à une tangente à la section circulaire de la douille (2).

7. Cheville selon l'une des revendications 1 à 6, caractérisée en ce que l'élévation (13) sur les éléments d'expansion (3) ou les élévations (27) sur la douille (2) a / ont une section demi-circulaire.

8. Cheville selon l'une des revendications 1, 3 à 5 et 7, caractérisée en ce que le front (10), rapproché aux éléments d'expansion, de la douille (2) présente des creux (11) dont le nombre correspond à celui des éléments d'expansion (3).

9. Cheville selon l'une des revendications 2 à 4, 6 et 7, caractérisée en ce que le front (12) rapproché à la douille, des éléments d'expansion (3) présente un creux (26).

10. Cheville selon l'une des revendications 1 à 7 et selon la revendication 8 ou 9, caractérisée en ce que les éléments d'expansion (3) présentent plusieurs tranchants (14) et l'élargissement (4) du boulon d'ancrage (1) est constitué par une section conique (6) qui, en passant par une section concave (5) se fond dans la tige cylindrique (8).
